# EUROPÄISCHE PATENTANMELDUNG

(11) **EP 4 083 447 A1**
(43) Veröffentlichungstag der Anmeldung: **02.11.2022**
(21) Anmeldenummer: 21170856.5
(22) Anmeldetag: 28.04.2021
(51) Int. Cl.: F16B 7/02, F16B 7/04

(54) **ANORDNUNG UND VERFAHREN ZUR HERSTELLUNG DER ANORDNUNG**

(71) Anmelder: Siemens Aktiengesellschaft, 80333 München (DE)
(72) Erfinder: Krüger, Ursus, 14089 Berlin (DE); Rehme, Olaf, 20148 Hamburg (DE); Stier, Oliver, 12163 Berlin (DE)

(57) **Zusammenfassung**

Zur Herstellung eines Materialverbunds aus einem rohrförmigen faserverstärkten Kunststoffkörper (10) und einem metallischen Körper (20) weist der metallische Körper (20) eine den Kunststoffkörper (10) umschließende Manschette (21) auf, die mittels Kaltgasspritzen auf den Kunststoffkörper (10) aufgepresst wird und durch Verformung eine kraftschlüssige Verbindung ausbildet.

## Beschreibung

Die Erfindung betrifft eine Anordnung mit einem sich rohrförmig erstreckenden ersten Körper, der ein Kunststoffmaterial aufweist und einem zweiten Körper, der ein Metall aufweist.

Zur Realisierung von Aufgaben im Leichtbau ist es von Interesse, Werkstoffe mit geringer Dichte einzusetzen. Dafür bieten sich Kunststoffe an, die oftmals jedoch nicht in allen funktionalen Bereichen einer Komponente eingesetzt werden können. Das führt dazu, dass eine Materialmischung aus beispielsweise Kunststoff und Metall verwendet wird.

Das Fügen von Metallen und Kunststoffen ist eine technologisch anspruchsvolle Aufgabe, insbesondere beim Einsatz faserverstärkter Kunststoffe. Die Herausforderung besteht darin, das Metall und den Kunststoff schnell und insbesondere fest zu fügen, so dass eine dauerhaft stabile Verbindung gewährleistet ist.

Es ist bekannt, Metalle und Kunststoffe durch Klebeprozesse zu fügen. Klebeprozesse sind jedoch aufwändig, da Klebstoff dosiert aufgetragen werden muss und aushärten muss, während die Fügepartner fixiert sein müssen. Die Bearbeitung ist dadurch langwierig und komplex.

Auch die Verbindung von Metall und Kunststoff mithilfe von Schrauben und Nieten ist ein gängiges Verfahren. Allerdings besteht dabei der Nachteil, dass die Struktur von insbesondere faserverstärkten Werkstoffen geschädigt und somit seine Festigkeit vermindert wird.

Eine weitere Möglichkeit nach dem Stand der Technik ist das thermische Fügen, bei dem auf eine möglichst strukturierte metallische Oberfläche ein Thermoplast aufgebracht und durch Erwärmung des metallischen Partners angeschmolzen wird, so dass beide Partner gefügt werden.

Alle genannten Verfahren bergen Nachteile hinsichtlich der Bearbeitungszeit, der Schädigung der Fügepartner oder der Dauerfestigkeit.

Es ist Aufgabe der vorliegenden Erfindung, eine verbesserte Anordnung mit einem Materialverbund umfassend ein Kunststoffmaterial und ein metallisches Material anzugeben, bei dem insbesondere die eingangs genannten Nachteile verringert sind. Eine weitere Aufgabe der Erfindung besteht darin, ein verbessertes Herstellungsverfahren für eine solche Anordnung anzugeben.

Diese Aufgabe wird gelöst durch eine Anordnung mit den Merkmalen von Anspruch 1. Eine Lösung hinsichtlich des Verfahrens besteht in dem Verfahren mit den Merkmalen von Anspruch 14.

Die erfindungsgemäße Anordnung umfasst einen sich rohrförmig erstreckenden ersten Körper, der ein Kunststoffmaterial aufweist und einen zweiten Körper, der ein Metall aufweist. Der zweite Körper weist eine den ersten Körper in wenigstens einem Teilbereich umschließende Manschette auf.

Weiterhin umfasst die Anordnung einen dritten Körper, der innerhalb des ersten Körpers angeordnet ist. Der dritte und zweite Körper sind mittels eines Verbindungselements verbunden. Der dritte und/oder zweite Körper ist derart geformt, dass die Kraftwirkung des Verbindungselements zu einer Verformung des zweiten und/oder dritten Körpers führt, durch die ein wenigstens stellenweiser Kraftschluss zwischen dem zweiten oder dritten Körper und der Innenseite des ersten Körpers bewirkt ist.

Dabei weist der zweite und/oder dritte Körper in einem Teilbereich eine Gitterstruktur auf, die eine Mehrzahl von Hohlräumen umfasst, wobei der Kraftschluss zumindest zwischen der Gitterstruktur und dem ersten Körper ausgebildet ist.

Bei dem erfindungsgemäßen Verfahren zur Herstellung einer Anordnung wird ein sich rohrförmig erstreckender erster Körper bereitgestellt, der ein Kunststoffmaterial aufweist, sowie ein zweiter Körper bereitgestellt, der ein metallisches Material und eine Manschette aufweist. Der zweite Körper wird auf den ersten Körper aufgeschoben, so dass die Manschette den ersten Körper in wenigstens einem Teilbereich umschließt.

Ein dritter Körper wird in den ersten Körpers eingebracht und der zweite und dritte Körper mittels eines Verbindungselements verbunden, wobei eine Gitterstruktur im dritten und/oder zweiten Körper, die eine Mehrzahl von Hohlräumen umfasst, durch die Kraftwirkung des Verbindungselements verformt wird, wodurch ein wenigstens stellenweiser Kraftschluss zwischen der Gitterstruktur und der Innenseite des ersten Körpers bewirkt wird.

Hierdurch wird eine Anordnung geschaffen, in der ein Verbund eines ersten Körpers mit einem Kunststoffmaterial mit einem zweiten Körper mit einem metallischen Material gegeben ist. Mit anderen Worten sind die beiden Körper gefügt. Besonders vorteilhaft ist dabei, dass die Gitterstruktur bei der Verbindung des zweiten und dritten Körpers nicht elastisch wie ein Vollkörper, sondern vielmehr weitgehend plastisch verformt wird. Dadurch wirkt eine verringerte Rückstellkraft auf die Schraube und selbst wenn die Schraube in ihrer Zugkraft nachlässt, bleibt die Verformung der Gitterstruktur weitgehend erhalten und dadurch auch der Kraftschluss mit der inneren Oberfläche des Rahmens. Vorteilhaft dabei insbesondere der Rahmen mit dem Kunststoffmaterial nicht beschädigt, was Stabilitätsvorteile bringt. Es entsteht also eine dauerhaft hochfeste Verbindung. Die Manschette fügt vorteilhaft einen Gegendruck von außen auf den Rahmen zu, sodass die Verformung von innen durch die Gitterstruktur einen Kraftschluss auch an der äußeren Oberfläche des Rahmens bewirkt.

Das beschriebene Verfahren zur Herstellung der Anordnung ist vorteilhaft schnell umsetzbar, da die einzelnen Körper unabhängig vom Fügen vorab gefertigt werden können und das Fügen lediglich in einem Verschrauben besteht.

Vorteilhafte Ausgestaltungen der erfindungsgemäßen Einrichtung gehen aus den von Anspruch 1 abhängigen Ansprüchen hervor. Dabei kann die Ausführungsform nach Anspruch 1 mit den Merkmalen eines der Unteransprüche oder vorzugsweise auch mit denen aus mehreren Unteransprüchen kombiniert werden. Demgemäß können für den Stromwandler noch zusätzlich folgende Merkmale vorgesehen werden:
Der erste Körper kann im Wesentlichen aus dem Kunststoffmaterial bestehen. Mit anderen Worten handelt es sich in diesem Fall bei dem ersten Körper um einen Kunststoffkörper. Das Kunststoffmaterial kann insbesondere ein faserverstärktes Kunststoffmaterial sein, beispielsweise kohlefaserverstärkter oder glasfaserverstärkter Kunststoff ist. Diese sind für den Leichtbau besonders geeignet, da sie einerseits eine geringe Dichte und andererseits eine hohe Festigkeit aufweisen. Gerade bei faserverstärkten Kunststoffen sind Fügeverfahren vorteilhaft, bei denen der Kunststoffkörper nicht durch Schraubverbindungen oder ähnliches geschädigt wird.

Der zweite und dritte Körper wiederum können im Wesentlichen metallisch sein. Mit anderen Worten handelt es sich um metallische zweite und dritte Körper. Bei dem Metall kann es sich beispielsweise um Stahl, Titan oder Aluminium handeln.

Besonders vorteilhaft ist es, wenn die Gitterstruktur mittels eines additiven Verfahrens hergestellt wird, insbesondere mittels Laserstrahlschmelzen. Durch das additive Fertigungsverfahren kann eine genau definierte Gitterstruktur erzeugt werden, beispielsweise mit Zellen in Quaderform oder Würfelform oder aber auch in einer Wabenstruktur. Dabei wird durch die so erzeugten Wandungen, die eine geringe Dicke von 0,2 mm bis 0,5 mm aufweisen können, insgesamt eine geringe Dichte des Materials erreicht bei gleichzeitig gut definierten und gleichmäßigen mechanischen Eigenschaften. Ebenso kann durch das additive Verfahren nicht nur die Gitterstruktur, sondern der gesamte dritte Körper erzeugt werden, was die Bereitstellung des dritten Körpers einfach und schnell macht. Die Hohlräume der Gitterstruktur weisen bevorzugt wenigstens ein Volumen von 1 mm^3 auf.

Die Anordnung kann einen metallischen vierten Körper umfassen, der in materialschlüssiger Verbindung mit dem zweiten Körper steht. Dieser vierte Körper kann beispielsweise eine Verdickung der Manschette umfassen und auch weitere Aufbauten. So kann der vierte Körper beispielsweise einen Flansch umfassen, mit dem vorteilhaft ein Übergang zu weiteren, herkömmlichen Befestigungsmethoden geschaffen wird.

Der vierte Körper ist besonders vorteilhaft mittels eines Verfahrens aus der Strahltechnik erstellt, insbesondere mittels Kaltgasspritzen. Bei diesem Verfahren wird der zweite Körper direkt als Substrat für das Material des vierten Körpers verwendet. Dadurch wird ein Materialschluss geschaffen, der eine feste und dauerhafte Verbindung des zweiten mit dem vierten Körper bewirkt.

Als Material des vierten Körpers kann vorteilhaft das Material des zweiten Körpers verwendet werden. Dadurch wird die Verwendung des Kaltgasspritzens verhältnismäßig unproblematisch möglich. Hier können beispielsweise Materialien wie Stahl, Buntmetall oder Titan verwendet werden. Wird als Material des vierten Körpers Aluminium verwendet, dann ist es vorteilhaft, wenn als Material für den zweiten Körper Titan verwendet wird, um ein galvanisches Potential zum ersten Körper zu vermeiden.

Es ist zweckmäßig, wenn der zweite Körper einen zumindest einseitigen Abschluss des rohrförmigen ersten Körpers bildet. Er ist dann nach Art einer Kappe ausgebildet, die sich über eines der Enden des ersten Körpers erstreckt und sich sowohl außenseitig in der Manschette als auch innenseitig fortsetzt. In der Mitte der Kappe, d.h. auf der Achse des rohrförmigen ersten Körpers ist das Verbindungselement, beispielsweise eine Schraube, angeordnet. Innenseitig im ersten Körper setzt sich der zweite Körper beispielsweise konusförmig fort, wobei die sich in den ersten Körper hinein verjüngende Form bei der Verbindung mit dem dritten Körper für die Verformung sorgt, die einen Kraftschluss zum ersten Körper ermöglicht.

Ist der erste Körper ein zylindrisches Rohr mit einem kreisförmigen Querschnitt, dann sind Drehungen des zweiten und dritten Körpers zumindest im unbefestigten Zustand möglich. Es besteht mit anderen Worten nur ein geringer Widerstand gegen Torsionskräfte. Sollen diese verbessert werden, kann der erste Körper einen von der Kreisform abweichenden Querschnitt, insbesondere einen rechteckigen oder ovalen Querschnitt, aufweisen. Solche Querschnitte verhindern die Drehung des zweiten und dritten Körpers praktisch völlig und wirken daher Torsionskräften entgegen.

Dadurch, dass der zweite Körper sich innen und außen vom ersten Körper erstreckt und somit ein Ende des ersten Körpers umfasst, ist ein Formschluss gegeben, wenn der zweite Körper weit genug in den ersten Körper eingeschoben ist. Dadurch ist der Widerstand gegen Druckkräfte, also solche, die ein weiteres Einschieben bewirken könnten groß. Der Widerstand gegen Zugkräfte in der Gegenrichtung ist aber nur durch den Kraftschluss der Gitterstruktur mit dem ersten Körper gegeben. Daher ist es vorteilhaft, wenn der erste Körper in dem Bereich, der von der Manschette umschlossen ist, ein gegenüber angrenzenden Bereichen vergrößertes Innenmaß aufweist. Dieser Bereich entspricht zweckmäßig dem Bereich, in dem die Verformung der Gitterstruktur einen Kraftschluss zum ersten Körper bewirkt. Durch das vergrößerte Innenmaß, also beispielsweise den vergrößerten Innendurchmesser, wird eine Erstreckung der Gitterstruktur in das so geschaffenen zusätzliche Volumen erlaubt, die einen Formschluss bewirkt, der gegenüber Druck- und Zugkräften hemmend wirkt. Dadurch wird also die Stabilität der Anordnung weiter verbessert.

Die Manschette kann durch Anwendung eines Treibverfahrens, insbesondere aus der Strahltechnik, verformt und dadurch an den ersten Körper angepresst werden. Dadurch wird ein zusätzlicher Kraftschluss zwischen dem zweiten Körper und dem ersten Körper geschaffen, der weiter die Stabilität erhöht. Besonders vorteilhaft ist es, wenn dazu das Verfahren des Kaltgasspritzens verwendet wird, da damit neben dem Anpressen der Manschette gleichzeitig der bereits beschriebene Aufbau des vierten Körpers erfolgen kann.

Weitere Vorteile und Merkmale sind der folgenden Beschreibung von Ausführungsbeispielen anhand der Figuren zu entnehmen. In den Figuren bezeichnen gleiche Bezugszeichen gleiche Bauteile und Funktionen.

Es zeigen:
Figur 1 ein Schnittbild eines Maschinenaufbaus mit einem Rahmen aus einem faserverstärkten Kunststoff und einem fügbaren Metallaufbau aus einem Abschlusskörper und einem dritten Körper;
Figur 2 ein Schrägbild des Rahmens;
Figur 3 ein Schnittbild des dritten Körpers im verformten Zustand;
Figur 4 ein Schrägbild des dritten Körpers im Ausgangszustand;
Figuren 5 bis 7 Beispiele für Strukturen, die den Kraftschluss im gefügten Zustand verbessern;
Figur 8 ein Schnittbild des Rahmens und des dritten Körpers;
Figur 9 ein Schnittbild des Maschinenaufbaus mit einem additiv erzeugten Flansch.

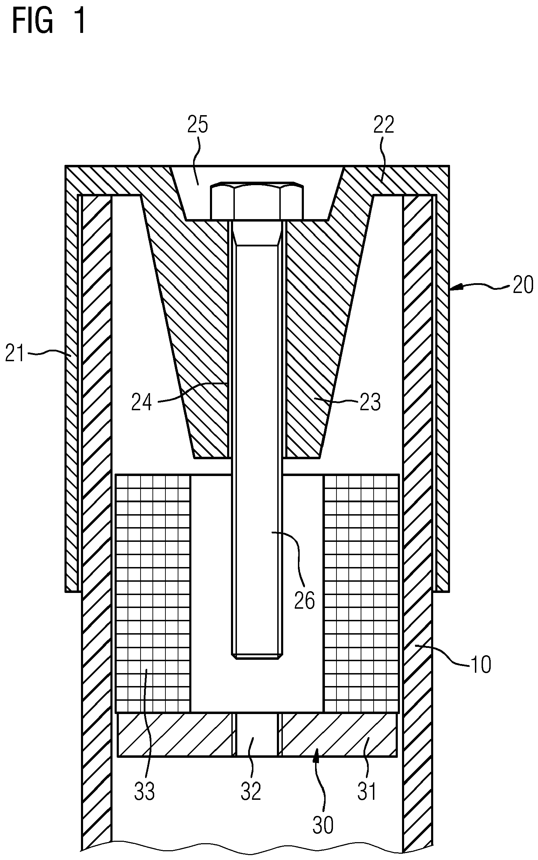

Figur 1 zeigt ein erstes Ausführungsbeispiel für die Erfindung. Dabei bildet ein Rahmen 10 aus einem glasfaserverstärkten Kunststoff die Basis für einen weiteren Aufbau von beispielsweise einer Maschine. Die Maschine kann eine elektrische Maschine sein, beispielsweise ein Generator. Prinzipiell soll die Maschine ein möglichst geringes Gewicht aufweisen. Um das zu erreichen, wird mit Methoden des Leichtbaus gearbeitet. Dabei werden Teile der Maschine aus Kunststoff gefertigt, unter anderem der Rahmen 10. Das ist aber häufig aus Gründen der Belastbarkeit oder anderer Materialeigenschaften nicht für alle Teile der Maschine möglich, weshalb solche Teile der Maschine aus Metall gefertigt werden. Diese metallischen Teile der Maschine und der Rahmen 10 müssen mit einer geeigneten Methode gefügt werden, also eine stabile Verbindung hergestellt werden.

Figur 1 zeigt zusätzlich zum Rahmen 10 einen metallischen Abschlusskörper 20 und einen
metallischen dritten Köper 30. Der metallische Abschlusskörper 20 umfasst eine Manschette 21, die den Rahmen 10 in einem Teilbereich seiner Erstreckung umfasst. Es ist zweckmäßig, wenn die Manschette 21 eng am Rahmen 10 anliegt, ein Kraftschluss zwischen der Manschette 21 und dem Rahmen 10 ist aber zumindest zu Beginn nicht notwendig.

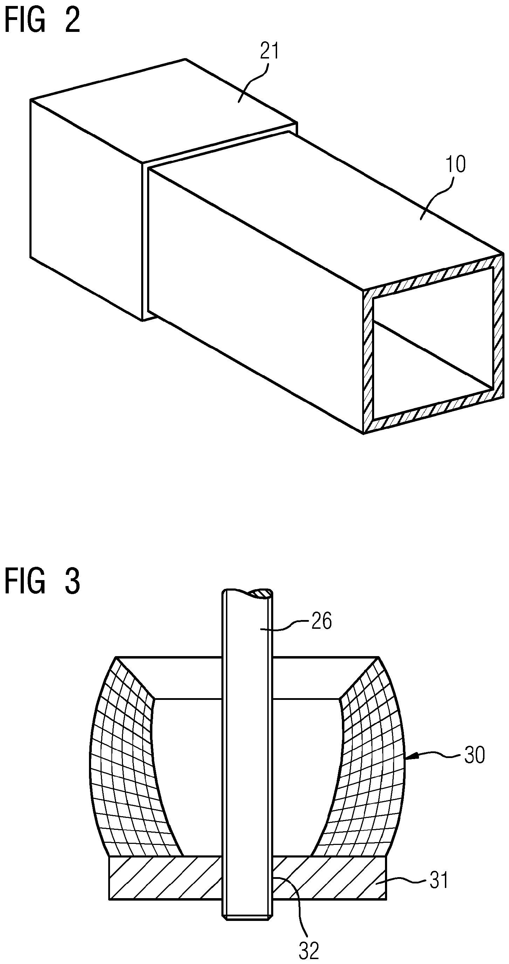

Figur 2 zeigt ein Schrägbild des Rahmens 10 und der Manschette 21. Der Querschnitt des Rahmens ist quadratisch. Der Rahmen 10 bildet also ein polygonales Rohr. Die Manschette 21 hat daher ebenfalls einen quadratischen Querschnitt. Der Teilbereich, in dem die Manschette 21 den Rahmen 10 umschließt, bildet ein Ende des Rahmens 10.

Wie in Figur 1 ersichtlich, bildet der metallische Abschlusskörper 20 einen einseitigen Abschluss für den Rahmen 10 und setzt sich daher an die außenliegende Manschette 21 anschließend nach Art einer Kappe 22 am Ende des Rahmens 10 fort. Diese Kappe 22 verschließt das betroffene Ende des Rahmens 10 vollständig.

Auf der zur Innenseite des Rahmens 10 weisenden Seite der Kappe 22 ist diese erweitert zu einem Abschluss in der Form eines Pyramidenstumpfs 23, der sich in den Rahmen 10 hineinweisend verjüngt. Der Pyramidenstumpf 23 schließt mit dem Rahmen 10 also ein zur Kappe 22 hin schmaler werdendes Volumen ein.

Dabei entspricht in diesem Ausführungsbeispiel der Querschnitt des Pyramidenstumpfs 23 demjenigen des Rahmens 10 und beide sind quadratisch. In anderen Ausführungsbeispielen können die Querschnitte auch kreisförmig oder oval sein. Auch andere Querschnitte sind möglich. Ein kreisförmiger Querschnitt lässt dabei eine Rotation des metallischen Abschlusskörpers 20 zu, während der hier gezeigte quadratische oder ein beispielsweise ovaler Querschnitt die Rotation verhindern. Ein nicht kreisförmiger Querschnitt ist daher vorteilhaft, um eine Stabilität bezüglich einer Rotation um die Rahmenachse zu erreichen, also bezüglich der Wirkung von Torsionskräften.

Im Zentrum der Kappe 22 ist eine zylindrische Aussparung 24 vorhanden, die der Achse des Rahmens 10 folgend durch die Kappe 22 und den Pyramidenstumpf 23 reicht. In die Aussparung 24 ist eine Schraube 26 soweit eingeschoben, dass der Schraubenkopf an der Kappe 22 bündig anliegt. Dabei weist die Kappe 22 eine Aussparung 25 auf, die so gestaltet ist, dass der Schraubenkopf versenkt ist und nicht über die Oberfläche der Kappe 22 außerhalb des Rahmens 10 hinausragt. Dadurch, dass die Kappe 22 den stirnseitigen Abschluss des Rahmens 10 bildet, ist die Schraube 26 von außen erreichbar.

Figur 1 zeigt auch den metallischen dritten Körper 30, der im Rahmen 10 angeordnet ist, aber im Zustand der Figur 1 noch nicht fest mit dem zweiten Körper 20 verbunden ist. Der dritte Köper 30 umfasst eine Bodenplatte 31, die dem Querschnitt des Rahmens 10 folgend in diesem Ausführungsbeispiel ebenfalls quadratisch ist. Die Bodenplatte 31 weist im Zentrum, also auf der Achse des Rahmens 10 liegend, eine Bohrung 32 mit einem Innengewinde auf, wobei das Innengewinde ausgestaltet ist, die Schraube 26 aufzunehmen und so eine Verbindung des zweiten und dritten Körpers 20, 30 herzustellen. Die Bodenplatte 31 ist so ausgedehnt, dass sie den Querschnitt des Rahmens 10 annähernd ausfüllt, aber im Rahmen 10 beweglich ist.

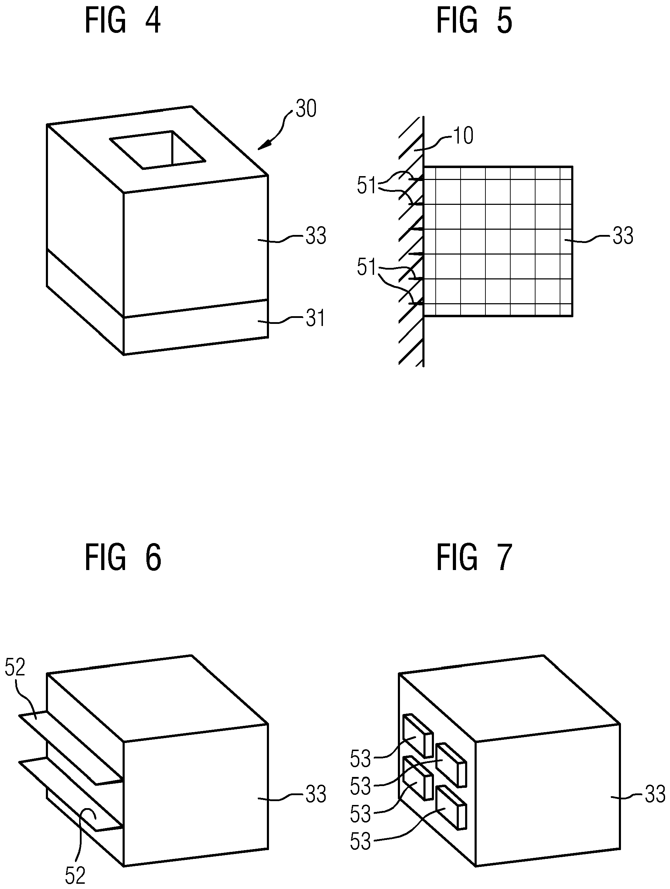

Weiterhin weist der dritte Körper 30 einen sich in der axialen Richtung des Rahmens 10 erstreckenden Rahmenaufbau 33 auf. Dessen äußere Maße sind wiederum so gewählt, dass die innere Oberfläche des Rahmens 10 annähernd berührt wird, aber der dritte Körper 30 im Rahmen 10 soweit beweglich bleibt, dass er an den Abschlusskörper 20 herangeschoben werden kann. Das Schrägbild der Figur 4 zeigt die äußere Form des dritten Körpers 30.

Der Rahmenaufbau 33 weist eine Gitterstruktur auf, beispielsweise eine Wabenstruktur. Mit anderen Worten ist der Rahmenaufbau 33 kein metallischer Vollkörper, sondern weist regelmäßige Hohlräume auf. Der dritte Körper 30 und der Rahmenaufbau 33 sind in einem Verfahren der additiven Fertigung hergestellt, beispielsweise mit einem pulverbettbasierten Laserstrahlschmelzverfahren. Ein solches Verfahren erlaubt es, den dritten Körper 30 inklusive des Rahmenaufbaus 33 einstückig herzustellen, was diesen stabiler macht. Die mit einem Verfahren wie dem selektiven Laserschmelzen erzielbaren dünnsten Wandstärken liegen typischerweise im Bereich von 0,2 bis 0,5 mm.

Der Rahmenaufbau 33 weist im Bereich der Achse des Rahmens 10 eine Aussparung auf, die in ihren Maßen in etwa denen des Pyramidenstumpfs 23 entsprechen. Dabei ist die Aussparung des Rahmenaufbaus 33 aber zylindrisch, verjüngt sich also im Gegensatz zum Pyramidenstumpf 23 nicht.

Zur Herstellung eines Kraftschlusses werden der Abschlusskörper 20 und der dritte Körper 30 zusammengeschoben und mittels der Schraube 26 aneinander gezogen. Die Kraftwirkung der Schraube 26 bewirkt, dass der Rahmenaufbau 33 in das Volumen, das zwischen dem Pyramidenstumpf 23 und dem Rahmen 10 verbleibt, hineingepresst. Bei ausreichender Kraftwirkung passiert eine Verformung des Rahmenaufbaus.

Figur 3 zeigt den dritten Körper 30 in einem Zustand, der nach dem vollständigen Heranziehen des dritten Körpers 30 an den Abschlusskörper 20 erreicht ist, wobei in diesem Fall kein außen umschließender Rahmen 10 vorhanden sein soll. Der Rahmenaufbau 33 ist dabei aufgewölbt, wobei die Aufwölbung stärker ausfällt, als sie es im Inneren eines begrenzenden Rahmens 10 täte. Durch die Aufwölbung ergibt sich ein Kraftschluss mit der inneren Oberfläche des Rahmens 10. Dabei verkrallt sich die Oberfläche des Rahmenaufbaus 33, also der Gitterstruktur mit der inneren Oberfläche des Rahmens 10.

Die Figuren 5 bis 7 zeigen Möglichkeiten, wie der Kraftschluss mit der inneren Oberfläche des Rahmens 10 verbessert werden kann. In einer ersten Variante umfasst die Oberfläche geometrisch betrachtet punktförmige, also dornartige Überstände 51. Zweckmäßig schließen diese an die in der Gitterstruktur des Rahmenaufbaus 33 an, bilden also Fortsetzungen der in der Gitterstruktur vorliegenden Rahmen. Figur 5 zeigt hierfür ein Schnittbild der Gitterstruktur, also einen Ausschnitt des Rahmenaufbaus 33 des dritten Körpers 30 zusammen mit einem Ausschnitt des Rahmens 10.

Die dornartigen Überstände 51 werden bei der Verformung der Gitterstruktur beim Anziehen der Schraube 26 in die innere Oberfläche des Rahmens 10 hineingedrückt und fügen dem reinen Kraftschluss an der Oberfläche auch einen Formschluss hinzu, der die Widerstandskraft gegen Torsions- und andere Krafteinwirkungen erhöht.

Hierbei ist besonders vorteilhaft, wenn die Gitterstruktur oder der gesamte dritte Körper 30 mittels eines additiven Herstellungsverfahrens aufgebaut wird, da in diesem Fall die dornartigen Überstände 51 weitgehend ohne zusätzlichen Aufwand und mit höchstens minimaler zusätzlicher Fertigungszeit zugefügt werden können.

Figur 6 zeigt ein Schrägbild eines Ausschnitts aus dem Rahmenaufbau 33 einer weiteren Variante. Bei dieser Variante weist die zum Rahmen 10 hin gewandte Oberfläche des Rahmenaufbaus 33 geometrisch betrachtet linienförmige Überstände, also Stege 52. In der in Figur 6 gezeigten Variante sind diese Stege 52 parallel, sie können aber in anderen Varianten auch beispielsweise rechtwinklig zueinander verlaufen. Die Stege 52 stellen dabei bevorzugt wie die dornartigen Überstände 51 Fortsetzungen der im Rahmenaufbau 33 vorliegenden Gitterstruktur dar, da dadurch das Eindringen der Stege 52 in die innere Oberfläche des Rahmens 10 begünstigt wird.

Auch die Stege 52 begünstigen den Kraftschluss zwischen dem dritten Körper 30 und der inneren Oberfläche des Rahmens 10, wobei die Stege 52 in der Hauptsache Kraftwirkungen in zu ihrem Verlauf senkrechter Richtung entgegenwirken.

Eine dritte Variante ist in Figur 7 dargestellt. Dabei weist die Oberfläche des Rahmenaufbaus 33 flächige Überstände 53 auf, die beispielsweise wie in Figur 7 quadratisch sein können, aber auch andere Formen haben können. Die flächigen Überstände 53 wie auch die dornartigen Überstände 51 und die Stege 52 können in vorteilhafter Weise bei Fertigung mittels additiver Fertigungsmethoden zusammen mit der Gitterstruktur erstellt werden bei geringem Zusatzaufwand.

In Figur 1 ist ersichtlich, dass der Abschlusskörper 20 durch die Verbindung aus Kappe 22 und Manschette 21 in einen Formschluss mit dem Rahmen 10 gebracht werden kann, indem die Kappe 22 an dem Ende des Rahmens 10 anliegt. Dieser Formschluss wirkt Druckkräften von außen auf die Kappe 22 in der axialen Richtung des Rahmens 10 effektiv entgegen. Eine ebensolche Wirkung eines Formschlusses bezüglich Kräften in der entgegengesetzten Richtung, also Zugkräften auf die Kappe weg vom Rahmen 10, besteht aber in der Ausgestaltung gemäß Figur 1 nicht.

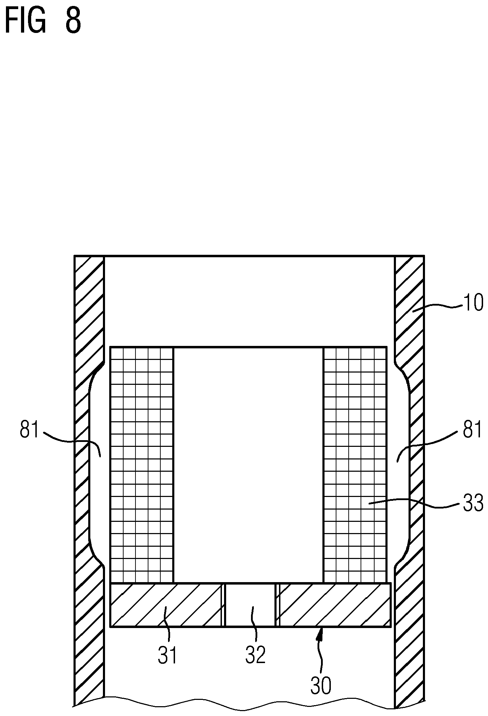

Dieser Nachteil wird in der Ausgestaltung behoben, die in Figur 8 dargestellt ist. Figur 8 zeigt ein Schnittbild analog zu dem der Figur 1. Dabei ist ein Ausschnitt des Rahmens 10 und der dritte Körper 30 dargestellt, während der Abschlusskörper aus Gründen der Übersicht nicht gezeigt ist. Der dritte Körper 30 ist dabei in seinem Zustand vor der Verformung gezeigt.

In der Ausführungsvariante gemäß Figur 8 weist die innere Oberfläche des Rahmens 10 eine oder mehrere Aussparungen 81 auf. Diese Aussparungen äußern sich in einer Verringerung der Wandstärke des Rahmens 10, wobei die äußere Oberfläche des Rahmens bevorzugt davon unberührt bleibt. Es wird also mit anderen Worten der Innendurchmesser in einem Abschnitt des Rahmens 10 erhöht, aber nicht unbedingt der Außendurchmesser. Die Aussparungen können dabei getrennt sein oder eine auf der inneren Oberfläche des Rahmens 10 umlaufende Aussparung 81 bilden. Eine solche umlaufende Aussparung 81 ist in Figur 81 angedeutet.

Bei der Verformung der Gitterstruktur des Rahmenaufbaus 33, die beim Heranziehen mittels der Schraube 26 auftritt, füllt die Gitterstruktur die Aussparungen 81 an. Zusätzlich zu dem Kraftschluss an der Oberfläche des Rahmens 10 wird dadurch ein Formschluss geschaffen, der sowohl Druckkräften als auch Zugkräften, also allen Kräften, die parallel zur Rahmenachse wirken, entgegenwirkt.

In einer weiteren Alternative oder zusätzlichen Ausgestaltung kann auch der Außendurchmesser des Rahmens 10 in einem Abschnitt erhöht werden. Dabei ist es zweckmäßig, wenn diese Erhöhung des Außendurchmessers angrenzend an die Lage der Manschette 21 vorliegt. Dadurch wird ein weiteres Aufschieben der Manschette 21 verhindert und so ein weiterer Formschluss geschaffen, der Druckkräften auf den Abschlusskörper 20 entgegenwirkt.

Ein weiterer Kraftschluss an der Außenseite des Rahmens 10 kann mittels eines Treibverfahrens hergestellt werden, indem das Material der Manschette 21 deformiert und dabei teilweise in die äußere Oberflächenschicht des faserverstärkten Materials des Rahmens 10 eingearbeitet wird.

Zum Treiben des Manschettenmaterials können Verfahren wie beispielsweise das Kugelstrahlen oder das Kaltgasspritzen verwendet werden. Durch den Energieeintrag der Kugeln oder der Spritzpartikel im Kaltgasspritzprozess wird die Manschette 21 mechanisch umgeformt und einerseits spaltfrei an den Rahmen 10 gepresst, wodurch der Kraftschluss entsteht. Andererseits wird dabei die Manschette 21 deutlich aufgeheizt, wodurch die Materialgrenzfläche ihre Form verändert, weil die einzelnen Kugeln oder Partikel des Kaltgasspritzstrahls einzelne Ausbeulungen in der dünnen Manschette 21 bewirken. Die Aufheizung bewirkt zusätzlich eine oberflächennahe Aufschmelzung der Matrix des Rahmen-Materials und eine oberflächliche Wellenbildung darin, so dass die Ausbeulungen im Material der Manschette 21 in diesen hineingetrieben werden. Daraus entsteht ein zusätzlicher leichter Formschluss, der sowohl bezüglich einer Torsion als auch bezüglich Zug- und Druckkräften wirkt.

Während die Verwendung von Kugelstrahlen zum Treiben die Querschnittsfläche und Zugbelastbarkeit der Manschette 21 in Längsrichtung des Rahmens 10 unverändert lässt, bietet Kaltgasspritzen die Möglichkeit, beides zu erhöhen, indem die Manschette 21 unmittelbar nach ihrer Verbindung mit dem Rohr, im laufenden Prozess, dicker gemacht wird. Kaltgasspritzen realisiert dann in einem Prozess Treiben (zu Beginn) und generative Fertigung (im weiteren Verlauf). Die generative Fertigung eines Elements auf der Außenseite der Manschette 21 erweitert vorteilhaft die Möglichkeiten der beschriebenen Fügemethode durch Änderung der Außenform und einen Übergang zu konventionellen Verbindungsmöglichkeiten.

Es ist zweckmäßig für die Anwendbarkeit des Kaltgasspritzens zum Treiben, wenn das Material der Manschette 21 dünn genug ist, um Ausbeulungen zu bilden, aber andererseits dick genug, um nicht zu reißen oder von den Partikeln durchschlagen zu werden. Die richtige Dicke hängt vom Werkstoff der Manschette 21 und von dem des Pulvers ab sowie von dessen Partikelgrößenverteilung und den verwendeten Spritzparametern. Daher ist es zweckmäßig, diese Parameter aufeinander abzustimmen. Ist die Dichte der Partikel viel größer als die des Materials der Manschette 21, ist ein Durchschlagen der Manschette 21 infolge hydrodynamischen Versagens wahrscheinlich. Ist dagegen die Dichte des Materials der Partikel viel kleiner als die des Materials der Manschette 21, kommt es verstärkt zu Rückprallen. Dieses geht mit einem Impulsübertrag einher, der eine plastische Verformung der Manschette 21 bewirken kann, aber nicht muss. Ist die Haft-Bedingung für das Partikel am Substrat nicht erfüllt, dann wird die Manschette 21 zwar bleibend verformt, das Partikel fällt aber dennoch ab. In diesen Fällen wirkt das Kaltgasspritzen wie ein reiner Treibprozess, der dem Kugelstrahlen ähnelt.

Ist ein reiner Treibprozess gewünscht, werden bevorzugt das Pulver und die Spritzparameter so gewählt, dass der Prozess außerhalb des Window of Deposition verläuft, und zwar in dem Bereich unterkritischer Partikelgeschwindigkeiten, also nicht im Erosions-Regime oberhalb des Windows of Deposition. Auf diese Weise wird sichergestellt, dass es nicht zum Durchschlagen kommt, sondern überwiegend Rückpraller erzielt werden.

Besonders vorteilhaft ist es aber, mit dem Kaltgasspritzen die generative Fertigung eines Elements an der Außenseite der Manschette 21 vorzunehmen. Dabei wird das sog. Window of Deposition beim Kaltgasspritzen verwirklicht, ein bekanntes Prozessfenster zur Erzeugung kompakter Festköper aus Pulver, bei dem die Haftbedingung immer realisiert ist.

Es ist in den meisten Fällen zweckmäßig, wenn das für das Kaltgasspritzen verwendete Pulver und die Manschette 21 aus dem gleichen Werkstoff bestehen. Das hat den Vorteil, dass keine galvanischen Potentiale entstehen, die eine Korrosion befördern könnten. Außerdem haben dann Pulver und Manschette 21 dieselbe Dichte und wenigstens ähnliche mechanische Kennwerte, so dass die Verformung von Partikeln und Manschette 21 ähnlich stark ausfällt. Dies ist sowohl vorteilhaft für generative Fertigung als auch als Kompromiss zwischen Rückprallen und Durchschlagen beim Treiben.

In manchen Ausgestaltungen kann es vorteilhaft sein, in der Materialwahl abzuweichen. Wird beispielsweise eine generative Fertigung von Aluminium auf der Manschette 21 angestrebt, ist es vorteilhaft, Titan als Manschettenmaterial zu verwenden und darauf entweder unmittelbar mit Aluminiumpulver zu beschichten oder erst mit Titanpulver das Treiben zu bewirken und dann auf Aluminiumpulver zu wechseln. Dadurch wird ein galvanisches Potential zum Material des Rahmens 10, also zum faserverstärkten Kunststoff, vermieden.

Durch weitere Versuche, beispielsweise auf Planar- oder Rundproben, bei denen Folien unterschiedlicher Dicke aus dem Manschettenmaterial auf dem Material des Rahmens 10 liegen, kann eine geeignete Dicke der Manschette 21 ermittelt werden. Dabei werden die Foliendicken in Abhängigkeit der realisierbaren Wandstärken der Manschette 21 gewählt. Die Bahngeschwindigkeiten werden so eingestellt, wie sie in der Original-Geometrie der verwendet werden könnten. Je geringer die Bahngeschwindigkeit, desto intensiver ist der Treibeffekt als Kombination von Partikeleinschlagrate und Wärmeeintrag und desto höher ist die Abscheiderate des additiven Materials auf der Folie. Durch anschließende Probenschliffuntersuchungen kann ermittelt werden, welche Kombination von Foliendicke und Bahngeschwindigkeit die größte Rauheit der Materialgrenze zwischen dem faserverstärkten Kunststoff und der Metallfolie erzielt hat.

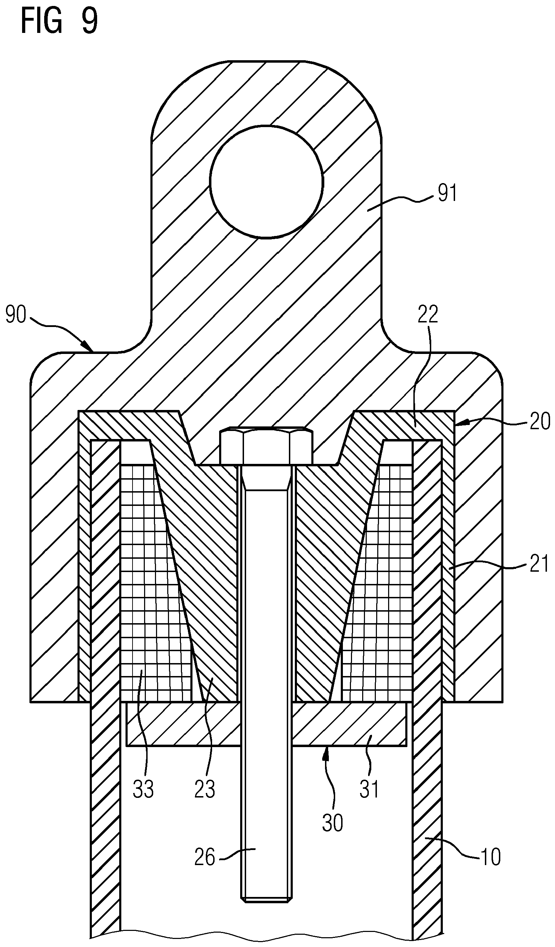

Sind die Prozessparameter bestimmt oder bekannt, kann vorteilhaft ein Aufbau von weiteren Elementen auf dem Abschlusskörper 20 durchgeführt werden. Auf diese Weise kann beispielsweise ein Flansch erzeugt werden. Dieser erlaubt eine weitere, herkömmliche Anbindung anderer Bauteile. Das Ergebnis eines solchen weiteren Aufbaus ist in Figur 9 gezeigt.

Figur 9 zeigt den Rahmen 10 aus faserverstärktem Kunststoff, den Abschlusskörper 20 und den dritten Körper 30 in der gefügten Form. Mittels der Schraube 26 ist der dritte Körper 30 vollständig an den Abschlusskörper herangezogen. Der Gitteraufbau des Rahmenaufbaus 33 ist verformt und bildet die wenigstens kraftschlüssige Verbindung mit dem Rahmen 10 aus. Die sich ergebende leichte Verformung des Rahmens 10 ist in Figur 9 nicht dargestellt.

Figur 9 zeigt weiterhin einen mittels eines Kaltgasspritz-Prozesses hergestellten Aufbau 90, der einen in axialer Richtung weisende Flansch 91 umfasst. Der Aufbau 90 umfasst dabei sowohl eine Aufdickung der Manschette 21 als auch eine deutlich Aufdickung des Materials über der Kappe 22. Der Kopf der Schraube 26 ist dabei vollständig eingeschlossen, so dass die Verbindung mit dem Rahmen 10 nicht mehr lösbar ist und eine Lockerung der Schraube 26 praktisch ausgeschlossen.

### Bezugszeichen

- 10: Rahmen
- 20: metallischer Abschlusskörper
- 21: Manschette
- 22: Kappe
- 23: Pyramidenstumpf
- 24: Bohrung
- 26: Schraube
- 30: dritter Körper
- 31: Bodenplatte
- 32: Bohrung mit Innengewinde
- 33: Rahmenaufbau
- 51: dornartiger Überstand
- 52: Steg
- 53: flächenartiger Überstand
- 81: Aussparung
- 90: Aufbau
- 91: Flansch

## Patentansprüche

1. Anordnung, aufweisend
- einen sich rohrförmig erstreckenden ersten Körper (10), der ein Kunststoffmaterial aufweist,
- einen zweiten Körper (20), der ein Metall aufweist,
wobei der zweite Körper (20) eine den ersten Körper (10) in wenigstens einem Teilbereich umschließende Manschette (21) aufweist,
- einen dritten Körper (30), der innerhalb des ersten Körpers (10) angeordnet ist,
wobei der dritte und zweite Körper (20, 30) mittels eines Verbindungselements (26) verbunden sind und der dritte und/oder zweite Körper (20, 30) derart geformt ist, dass die Kraftwirkung des Verbindungselements (26) zu einer Verformung des zweiten und/oder dritten Körpers (20, 30) führt, durch die ein wenigstens stellenweiser Kraftschluss zwischen dem zweiten oder dritten Körper (20, 30) und der Innenseite des ersten Körpers (10) bewirkt ist,
- wobei der zweite und/oder dritte Körper (20, 30) in einem Teilbereich eine Gitterstruktur aufweist, die eine Mehrzahl von Hohlräumen umfasst, wobei der Kraftschluss zwischen der Gitterstruktur und dem ersten Körper (10) ausgebildet ist.

2. Anordnung nach Anspruch 1, bei der der erste Körper (10) im Wesentlichen aus dem Kunststoffmaterial besteht.

3. Anordnung nach Anspruch 1 oder 2, bei der das Kunststoffmaterial ein kohlefaserverstärkter oder glasfaserverstärkter Kunststoff ist.

4. Anordnung nach einem der vorangehenden Ansprüche, bei der die Gitterstruktur mittels eines additiven Verfahrens hergestellt ist, insbesondere Laserstrahlschmelzen.

5. Anordnung nach einem der vorangehenden Ansprüche mit einem metallischen vierten Körper (90), der in materialschlüssiger Verbindung mit dem zweiten Körper (20) steht.

6. Anordnung nach Anspruch 5, bei dem der vierte Körper (90) mittels eines Verfahrens aus der Strahltechnik erstellt ist, insbesondere mittels Kaltgasspritzen.

7. Anordnung nach einem der vorangehenden Ansprüche, bei dem der vierte Körper (90) ein mechanisches Verbindungselement, insbesondere einen Flansch (91), umfasst.

8. Anordnung nach einem der vorangehenden Ansprüche, bei der der zweite Körper (20) einen zumindest einseitigen Abschluss des rohrförmigen ersten Körpers (10) bildet.

9. Anordnung nach einem der vorangehenden Ansprüche, bei der das Verbindungselement (26) eine Schraube (26) ist.

10. Anordnung nach einem der vorangehenden Ansprüche, bei dem der erste Körper (10) einen von der Kreisform abweichenden Querschnitt, insbesondere einen rechteckigen oder ovalen Querschnitt, aufweist.

11. Anordnung nach einem der vorangehenden Ansprüche, bei der der zweite und dritte Körper (20, 30) im Wesentlichen metallisch sind.

12. Anordnung nach einem der vorangehenden Ansprüche, bei dem der erste Körper (10) in dem Bereich, der von der Manschette (21) umschlossen ist, ein gegenüber angrenzenden Bereichen vergrößertes Innenmaß aufweist.

13. Anordnung nach einem der vorangehenden Ansprüche, bei dem die Manschette (21) mittels einer Verformung durch ein Treibverfahren, insbesondere aus der Strahltechnik, an den ersten Körper (10) angepresst ist.

14. Verfahren zur Herstellung einer Anordnung, bei dem
- ein sich rohrförmig erstreckender erster Körper (10) bereitgestellt wird, der ein Kunststoffmaterial aufweist,
- ein zweiter Körper (20), der ein Metall aufweist, bereitgestellt wird, wobei der zweite Körper (20) eine Manschette (21) aufweist,
- der zweite Körper (20) auf den ersten Körper (10) aufgeschoben wird, so dass die Manschette (21) den ersten Körper (10) in wenigstens einem Teilbereich umschließt,
- ein dritter Körper (30) in den ersten Körper (10) eingebracht wird,
- der zweite und dritte Körper (20, 30) mittels eines Verbindungselements (26) verbunden werden, wobei eine Gitterstruktur im dritten und/oder zweiten Körper (20, 30), die eine Mehrzahl von Hohlräumen umfasst, durch die Kraftwirkung des Verbindungselements (26) verformt wird, wodurch ein wenigstens stellenweiser Kraftschluss zwischen der Gitterstruktur und der Innenseite des ersten Körpers (10) bewirkt wird.

15. Verfahren nach Anspruch 14, bei dem die Manschette (21) mittels eines Treibverfahrens, insbesondere aus der Strahltechnik, insbesondere Kaltgasspritzen, verformt wird.
